# EUROPEAN PATENT APPLICATION

(11) **EP 2 481 620 A2**
(43) Date of publication of application: **01.08.2012**
(21) Application number: 11192354.6
(22) Date of filing: 07.12.2011
(51) Int. Cl.: B60K 11/08

(54) **Air guide plate for automobile and sealing structure**

(30) Priority: 01.02.2011 JP 2011019901
(71) Applicant: Kojima Press Industry Co., Ltd., Toyota-shi, Aichi 471-0875 (JP)
(72) Inventor: Hirano, Katsuhisa, Toyota-shi, Aichi 471-0875 (JP)
(74) Representative: Naylor, Matthew John

(57) **Abstract**

An air guide plate is provided which can easily realize stable sealing properties with respect to an automobile part disposed near the air guide plate and which can provide a structure in which the air guide plate and the automobile part are not collided, at a low cost. The air guide plate 10 includes a plate body 12 made of resin and rear and front sealing members 26, 28 integrally formed on rear and front end sections 18, 20 of the plate body 12. The sealing members 26, 28 are flexible at at least base end portions 32, 38 thereof and extend from the end sections 18, 20 of the plate body 12 at an angle of more than 90 degrees to less than 180 degrees with respect to the air guide surface 13 of the plate body 12.

## Description

The present application is based on Japanese Patent Application No. 2011-019901 filed on February 1, 2011, the contents of which are incorporated herein by reference.

### BACKGROUND OF THE INVENTION

### Field of the Invention

The present invention relates to an air guide plate for an automobile and a sealing structure, and in particular to an improved structure of an air guide plate which is arranged at the front of an automobile and guides an airflow produced during driving of the automobile to a radiator, and an air guide plate having such an improved structure, and further a novel structure for sealing a gap formed between the air guide plate and an automobile part positioned near the air guide plate.

### Discussion of Related Art

Generally, in an automobile, when separate automobile parts are assembled together, a predetermined gap or space, i.e., a designed gap, is provided between the automobile parts positioned close to each other, for prevention of noise, damage and deformation of each of the automobile parts, which are caused by a contact of the automobile parts by vibration during driving.

For example, at a front of an automobile, air guide plates each having an air guide surface for guiding an airflow produced during driving of the automobile to a radiator are disposed in such a way that the air guide surface extends in a front and back direction of the automobile while they are disposed between a shroud, which covers sides of the radiator, and a bumper, which is positioned in front of the radiator, such that the air guide plates are opposed to each other in a width direction of the automobile, alternatively or in addition, such that the air guide plates are opposed to each other in a vertical direction. Between the air guide plate and various automobile parts such as a shroud, radiator, radiator support, bumper, bumper reinforcement, lower absorber, upper absorber, harness, various hoses such as a hose for air conditioner, which are positioned near the air guide plate, and another air guide plate that is adjacent to the air guide plate, the gap as the above-described designed gap is provided.

However, when the gap is provided between the air guide plate and the automobile part, which is positioned near the air guide plate, the air guided by an air guide surface of the air guide plate leak or escape through the gap to the outside. As a result, the cooling efficiency of the radiator is degraded. Further, through the gap, hot air from the engine may be sent to the radiator side. It may also degrade the cooling efficiency of the radiator. Furthermore, the air leak through the gap between the air guide plate and the automobile part may lower the aerodynamic performance.

Conventionally, various cushioning materials such as sponge are disposed in the gap formed between the air guide plate and the automobile part positioned near the air guide plate in order to fill the gap, thereby sealing the gap between the air guide plate and the automobile part. However, the cushioning material is generally bonded and fixed by a double-stick tape, for example, to opposing portions of the air guide plate and the automobile part that are opposed to each other with the gap therebetween. Thus, if the gap has a relatively complex shape, for example, the adhesion of the cushioning material to each of the opposing portions of the air guide plate and the automobile part would be varied. As a result, it may be difficult to secure the stable sealing properties. Further, the cushioning material may come off the air guide plate or the automobile part, when the air guide plate and the automobile part are displaced so as to separate from each other due to the vibration occurred during driving. In addition, a troublesome bonding process of the cushioning material is another problem.

Further, conventionally, in order to prevent the air from leaking through the gap between the automobile part and the air guide plate, a sealing member made of rubber or elastomer is integrally formed on an outer periphery of a plate body of the air guide plate by co-injection molding, and the sealing member is arranged so as to be in contact with the automobile part positioned near the air guide plate, under installation of the air guide plate to the automobile. However, the air guide plate used therein generally has the plate body made of resin material. Therefore, the air guide plate integrally including the sealing member made of rubber or elastomer requires two kinds of materials, i.e., rubber material or elastomer material and resin material. Thus, the cost of the air guide plate is inevitably high. In addition, recycling of the air guide plate is troublesome, because the plate body and the sealing member need to be separated for reuse.

Under such situations, for example, JP-A-8-295122 discloses a ventilation duct made of resin and used in an air conditioner for an automobile. The ventilation duct includes a duct body and a sealing member consisting of an elastically deformable and flexurally deformable thin strip integrally molded on the duct body. In this ventilation duct, the sealing member formed on the duct body is contacted with a member to be connected with the ventilation duct, while the sealing member is subjected to flexural deformation, thereby sealing a gap between the ventilation duct and a member to be connected with the ventilation duct.

However, even if the structure of the sealing member of the ventilation duct is applied to the air guide plate for an automobile in order to solve the above problems, i.e., even if a deformable sealing member, which is a thin strip, integrally molded on the plate body made of resin is adapted to be contacted with an automobile part positioned near the air guide plate while the sealing member is subjected to flexural deformation in order to seal the gap between the air guide plate and the automobile part, there are still problems. Specifically, in the conventional ventilation duct having the sealing member, a base end portion of the sealing member extends straight in the axial direction of the duct body, which is the flowing direction of air in the duct body, or extends straight in the direction perpendicular to the axis toward the inside or outside of the duct body from the end section of the duct body. The present inventors have found that the structure of the ventilation duct including such a sealing member has the following problems when used in the air guide plate for an automobile.

Specifically, when the sealing member extends straight in the extending direction of the air guide surface of the plate body from the end section of the plate body, which is the flowing direction of air generated during driving of an automobile, together with a load in the direction of flexural deformation, a compression load is applied to the base end portion of the sealing member in a direction that makes the size of the base end portion smaller. As a result, a large reaction force based on the resilience against the flexural deformation is applied from the sealing member to the automobile part that is in contact with the sealing member. In the conventional ventilation duct, there is no problem even if the reaction force applied from the sealing member to the automobile part is large, because the duct body, which integrally includes the sealing member, and the automobile part, are connected with each other. However, in the air guide plate which is relatively displaced against the automobile part, if the reaction force applied to the automobile part from the sealing member is large, the plate body is repeatedly relatively displaced against the automobile part by a vibration input into the automobile, for example, thereby leading a problem of wear or cut of the part of the automobile part that is contacted with the sealing member or the part of the sealing member that is contacted with the automobile part. In such a case, the sealing properties between the sealing member and the automobile part may be degraded.

Further, in the case where the sealing member extends from the end section of the plate body in the direction perpendicular to the extending direction of the air guide surface toward the air guide surface side of the plate body, an angle formed between the sealing member and the air guide surface is an acute angle when the sealing member is subjected to flexural deformation while being in contact with the automobile part. Consequently, the sealing member interferes with smooth airflow that is guided by the air guide surface, thereby increasing the flow resistance of the airflow. As a result, aerodynamic performance of the automobile may be degraded.

Further, in the case where the sealing member extends from the end section of the plate body in the direction perpendicular to the extending direction of the air guide surface toward the side opposite to the air guide surface of the plate body, if the automobile part positioned near the air guide plate is a fan shroud or the like that surrounds the radiator from outside, the plate body is positioned inner side of the automobile part when the sealing member is subjected to the flexural deformation with the sealing member being in contact with the automobile part. In such a case, the plate body is in contact with the radiator when the plate body is largely displaced in the back direction of the vehicle at the time of collision or the like. This may damage the radiator.

### SUMMARY OF THE INVENTION

The present invention has been made in the light of the situations described above, and an object of the invention is to provide an improved air guide plate for an automobile that guides an airflow produced during driving of an automobile to a radiator more smoothly and can easily realize stable sealing properties with respect to the automobile part disposed near the air guide plate, at a low cost, and further can effectively avoid the contact with the automobile part disposed near it or with the radiator even if the air guide plate is displaced in the front and back direction of the vehicle. It is another object of the present invention to provide a sealing structure that can advantageously secure stable sealing properties between the air guide plate and the automobile parts positioned near it.

To achieve the aforementioned objects, or to solve the problems understood from description throughout the present specification and drawings, the present invention may be preferably embodied according to various aspects which will be described below. Each aspect described below may be employed in any combination. It is to be understood that the aspects and technical features of the present invention are not limited to those described below, and can be recognized based on the inventive concept disclosed in the whole specification and drawings.

<1> An air guide plate for guiding an airflow produced during driving of an automobile to a radiator, the air guide plate being disposed at a front of the automobile so as to extend in a front and back direction of the automobile, comprising: a plate body (12) formed of resin material and including an air guide surface (13), the plate body being arranged at a front of an automobile without being connected to at least one automobile part disposed in the front of the automobile such that the air guide surface extends in the front and back direction of the automobile; and at least one first sealing member (26, 28) composed of a projecting strip formed of resin material that has a thickness smaller than the plate body and that is provided on at least one end section (18, 20) of the plate body by an integral molding, the at least one first sealing member including a base end portion (32, 38) that is deformable and extends from the end section of the plate body at an angle of more than 90 degrees to less than 180 degrees with respect to the air guide surface of the plate body.

<2> The air guide plate according to the above aspect <1>, further comprising at least one second sealing member (28) composed of a projecting strip formed of resin material that has a thickness smaller than the plate body and that is provided on an end section (20) of the plate body by the integral molding, the at least one second sealing member including a base end portion (38) that is deformable and extends from the end section of the plate body at an angle of more than 180 degrees to less than 270 degrees with respect to the air guide surface of the plate body.

<3> The air guide plate according to the above aspect <1>, wherein the at least one first sealing member has a flat plate shape.

<4> The air guide plate according to the above aspect <2>, wherein the at least one second sealing member has a flat plate shape.

<5> The air guide plate according to the above aspect <1> or <3>, wherein the resin material for forming the plate body and the at least one first sealing member is a blend of polypropylene and rubber.

<6> The air guide plate according to the above aspect <2> or <4>, wherein the resin material for forming the plate body and the at least one second sealing member is a blend of polypropylene and rubber.

<7> The air guide plate according to any one of the above aspects <1> to <6>, wherein the front of the automobile is between a shroud (46), which is disposed so as to cover sides of the radiator (44) of the automobile, and a bumper (42), which is located in front of the shroud, and the at least one automobile part includes the shroud and the bumper.

<8> A sealing structure for preventing air from leaking through at least one gap (56, 58) formed between an air guide plate, which guides an airflow produced during driving of an automobile to a radiator, and at least one automobile part, which is disposed near the air guide plate, the air guide plate being disposed at a front of the automobile so as to extend in a front and back direction of the automobile, wherein the air guide plate according to any one of the above aspects <1>, <3>, or <5> is arranged such that the plate body of the air guide plate is disposed at the front of the automobile without being connected to the at least one automobile part and the air guide surface of the plate body extends in the front and back direction of the automobile, and the at least one first sealing member is disposed so as to be in contact with the at least one automobile part under flexural deformation, thereby closing the at least one gap by the at least one first sealing member to prevent the air from leaking therethrough.

<9> The sealing structure according to the above aspect <8>, wherein the at least one first sealing member is in contact with the at least one automobile part in a state where the at least one first sealing member is allowed to be subjected to further flexural deformation when the at least one automobile part and the plate body are relatively displaced so as to be close to each other.

<10> The sealing structure according to the above aspect <8> or <9>, wherein the at least one first sealing member is disposed so as to be in contact with the at least one automobile part such that the angle between the base end portion thereof and the air guide surface becomes smaller when the base end portion thereof is subjected to flexural deformation.

<11> The sealing structure according to any one of the above aspects <8> to <10>, wherein the air guide plate further comprise at least one second sealing member composed of a projecting strip formed of resin material that has a thickness smaller than the plate body and that is provided on an end section of the plate body by the integral molding, the at least one second sealing member including a base end portion that is deformable and extends from the end section of the plate body at an angle of more than 180 degrees to less than 270 degrees with respect to the air guide surface of the plate body, and wherein the at least one second sealing member is disposed so as to be in contact with the at least one automobile part under flexural deformation, thereby closing the at least one gap by the at least one second sealing member to prevent the air from leaking therethrough.

<12> The sealing structure according to the above aspect <11>, wherein the at least one second sealing member is in contact with the at least one automobile part in a state where the at least one first sealing member is allowed to be subjected to further flexural deformation when the at least one automobile part and the plate body are relatively displaced so as to be close to each other.

<13> The sealing structure according to the above aspect <11> or <12>, wherein the at least one second sealing member is disposed so as to be in contact with the at least one automobile part such that the angle between the base end portion thereof and the air guide surface becomes larger when the base end portion thereof is subjected to flexural deformation.

<14> The sealing structure according to any one of the above aspects <8> to <13>, wherein the front of the automobile is between a shroud, which is disposed so as to cover sides of the radiator of the automobile, and a bumper, which is located in front of the shroud, and the at least one automobile part includes the shroud and the bumper.

The air guide plate for an automobile of the present invention can smoothly guide the airflow produced during driving of an automobile to a radiator more smoothly and can easily realize stable sealing properties with respect to the automobile part positioned near it at a low cost. Further, when the plate body is largely displaced in the front and back direction of the automobile, the plate body does not contact with the automobile part positioned near it or the radiator, thereby effectively preventing the damage caused by the contact of the automobile part or radiator and the plate body.

The sealing structure of the present invention can advantageously obtain substantially the same advantages as those of the above-described air guide plate for an automobile.

### BRIEF DESCRIPTION OF THE DRAWINGS

The above and other objects, features, advantages and technical and industrial significance of the present invention will be better understood by reading the following detailed description of a preferred embodiment of the invention, when considered in connection with the accompanying drawings, in which:
Fig. 1 is a front view showing one embodiment of an air guide plate having a structure in accordance with the present invention;
Fig. 2 is a partially enlarged view of a cross section taken along the line A-A in Fig.1;
Fig. 3 is a longitudinal cross sectional view showing a state in which the air guide plate illustrated in Fig. 1 is disposed between the shroud and the bumper to seal the gaps between the air guide plate and the shroud and between the air guide plate and the bumper;
Fig. 4 is a cross sectional view taken along the line B-B in Fig. 3;
Fig. 5 is a view corresponding to Fig. 2 and showing another embodiment of the air guide plate having a structure in accordance with the present invention;
Fig. 6 is a view corresponding to Fig. 4 and showing a state where the air guide plate shown in Fig. 5 is disposed between the shroud and the bumper;

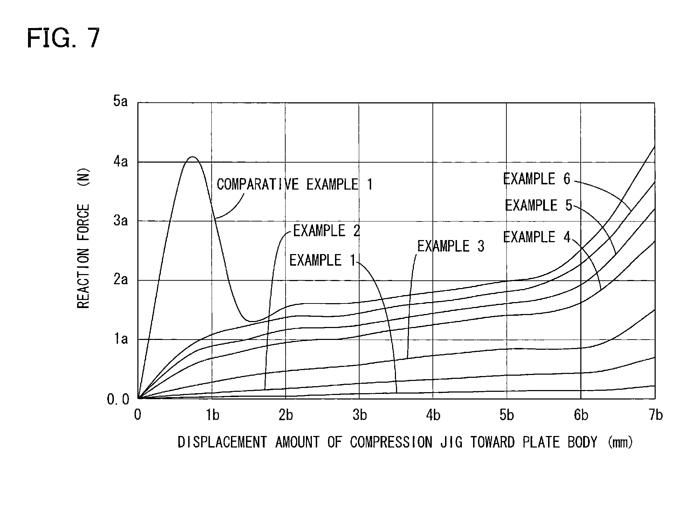

Fig. 7 is a graph for comparison of the air guide plates having a structure in accordance with the present invention and the air guide plate having a conventional structure, the graph showing a relationship between the amount of the displacement of the compression jig toward the plate body, in which the compression jig moves toward the plate body while in contact with the sealing member so as to compress the sealing member and allow it to be subjected to flexural deformation, and the reaction force, which is generated at the sealing member subjected to flexural deformation by the displacement of the compression jig toward the plate body; and
Fig. 8 is a view corresponding to Fig. 2 and shows a further another embodiment of the air guide plate having a structure of the present invention.

### DETAILED DESCRIPTION OF THE INVENTION

To further clarify the present invention, there will be described in detail embodiments of the present invention with reference to the accompanying drawings.

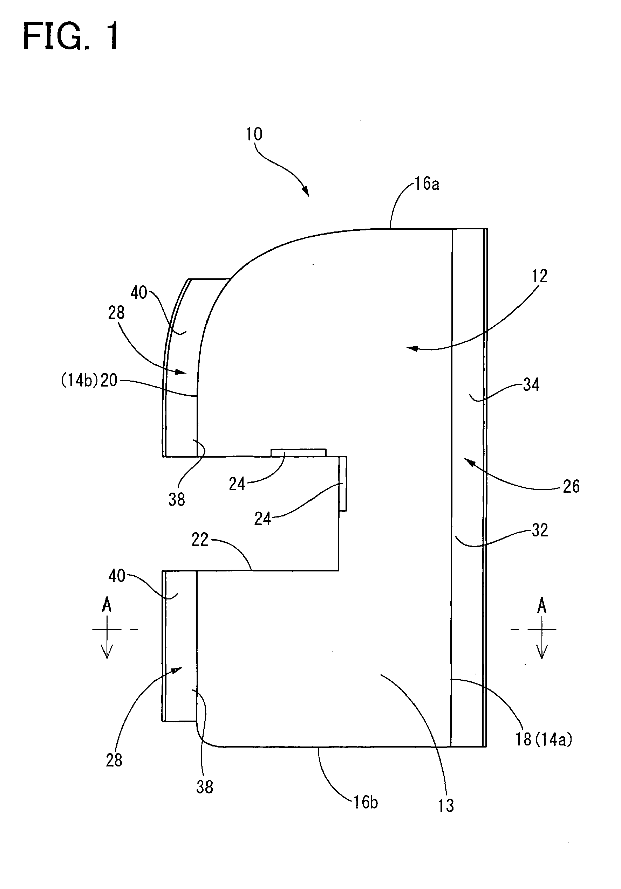

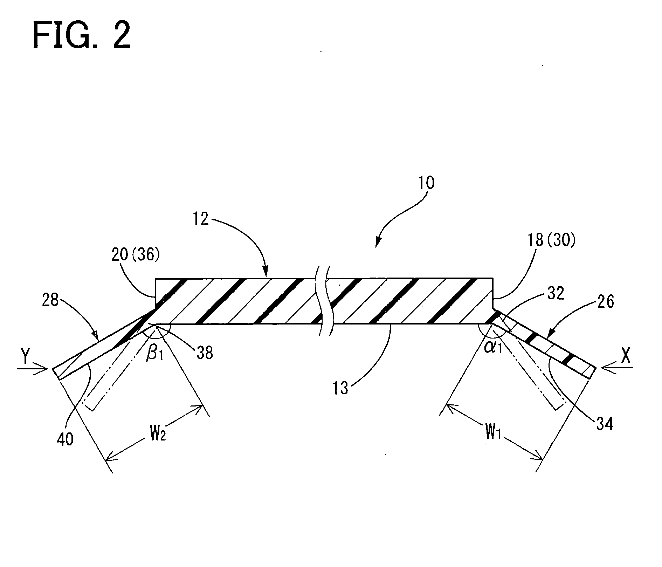

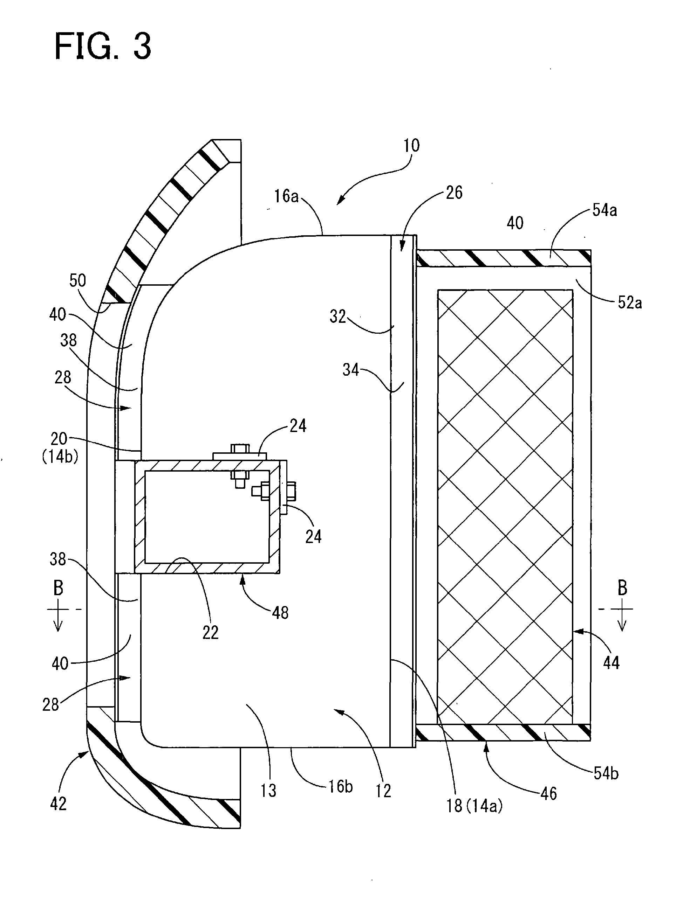

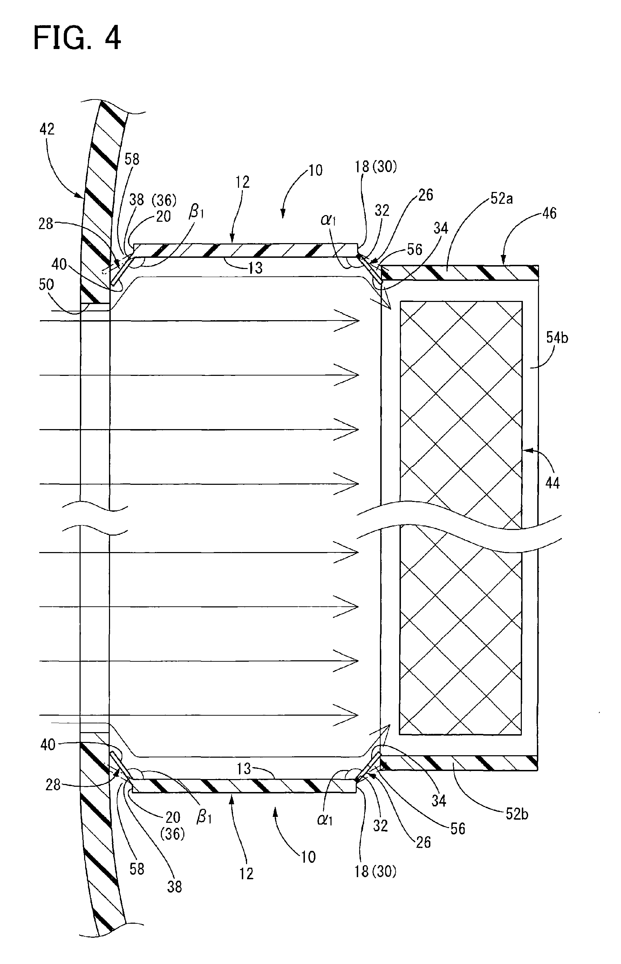

Initially, Fig. 1 shows a front view of an air guide plate in accordance with a first embodiment of the present invention, which is disposed between a bumper cover and a shroud of an automobile, and Fig. 2 shows a cross sectional view of the air guide plate. As apparent from Fig. 1 and Fig. 2, an air guide plate 10 of the present embodiment includes a plate body 12 made of resin. Hereinafter, the up and down direction in Fig. 1 is referred to as the vertical direction of the air guide plate 10, and the horizontal direction in Fig. 1 is referred to as the front and back direction of the air guide plate 10, based on the state where the air guide plate 10 is installed in an automobile (see Fig. 3 and Fig. 4).

More specifically described, the plate body 12 has a flat plate shape which is a long rectangular shape as a whole. One surface of the plate body 12 is made as a flat air guide surface 13. The air guide surface 13 guides the airflow introduced into the automobile from the bumper cover side to the shroud side, in a state where the air guide plate 10 is vertically provided so as to extend in the front and back direction between the bumper cover and the shroud.

Further, the plate body 12 includes: a first long side 14a and a second long side 14b, which extend straight in the vertical direction; a first short side 16a, which extends so as to connect upper ends of the first and second long sides 14a and 14b; and a second short side 16b, which extends so as to connect lower ends of the first and second long sides 14a and 14b. An end section of the plate body 12 including the first long side 14a has a shape corresponding to the front face of a vertical wall of a shroud, which will be described later, i.e., the end section of the plate body 12 including the first long side 14a is made as a rear end section 18 having a shape extending straight in a vertical direction. Further, an end section of the plate body 12 including the second long side 14b has a shape corresponding to an inner surface of a bumper cover, which will be described later, i.e., the end section of the plate body 12 including the second long side 14b is made as a front end section 20 including a section extending curvedly in the vertical direction and another section extending straight in the vertical direction. In the substantially middle portion in the vertical direction of the front end section 20, a notch or cut-out 22 having a rectangular shape is provided. Further, two mounting projections 24, 24 having a plate shape are integrally provided on one surface in the thickness direction of the plate body 12 at the periphery of the notch 22.

The rear end section 18 of the plate body 12 integrally has a rear sealing member 26 formed of a strip that projects backward therefrom. Further, each section in the vertical direction of the front end section 20 having the notch 22 therebetween integrally has a front sealing member 28 formed of a strip projecting frontward therefrom. Each of the rear sealing member 26 and the front sealing members 28, 28 has a thickness that is smaller than the plate body 12 and a width that is constantly small. Further, each of the rear and front sealing members 26, 28, 28 is connected to the air guide plate 10 with constant thickness. Further, the rear sealing member 26 and the front sealing members 28, 28 each has a long thin flat plate shape continuously extending along the rear end section 18 (the first long side 14a) and the front end section 20 (the second long side 14b) over the entire length thereof.

Specifically, the air guide plate 10 is constituted by an integrally molded product (for example, injection molded product) including the plate body 12 and the rear and front sealing members 26, 28, 28, which are formed of the same resin material. Here, as the resin material for the air guide plate 10, a blend of polypropylene and rubber is employed. As is well known, the blend of polypropylene and rubber exhibits a sufficient flexural rigidity or bending rigidity when the thickness is sufficiently large and exhibits an adequate deformability when the thickness is sufficiently small.

Accordingly, in the air guide plate 10 formed of the blend of polypropylene and rubber material in accordance with the present embodiment, although the air guide plate 10 is an integral product, the plate body 12 has a high flexural rigidity because the plate body 12 has a thick and wide flat plate shape, and the entire rear and front sealing members 26, 28 have adequate deformability because the rear and front sealing members 26, 28 each have a thin and narrow flat plate shape.

The air guide plate 10 may be suitably formed of various known resin materials other than the blend of polypropylene and rubber. For example, the air guide plate 10 may be formed of a blend (polymer alloy) of polypropylene and polyethylene (low-density polyethylene), a blend of polyethylene (low-density polyethylene) and rubber, or polypropylene or polyethylene alone. Kinds of rubber that is blended with polypropylene or polyethylene are not particularly limited. Any rubber, for example a well-known thermal plastic elastomer, which is conventionally used with polypropylene or polyethylene, may be blended.

Of the above various materials, the air guide plate 10 is preferably formed of one having flexural modulus of about 250 to 1200 MPa. If the flexural modulus of the formation material of the air guide plate 10 is less than 250 MPa, sufficient flexural rigidity may not be obtained even if the thickness of the plate body 12 is made larger. On the other hand, if the flexural modulus is more than 1200 MPa, the deformability of the rear and front sealing members 26, 28 having small thickness may be insufficient.

Although the thickness of each of the plate body 12, the rear sealing member 26, and the front sealing member 28 is not particularly limited, the thickness of the plate body 12 is preferably within a range of about 1.2 to 2.5 mm. The plate body 12 having a thickness of less than 1.2 mm may have insufficient flexural rigidity. Thus, when the plate body having such a thickness is disposed between the bumper cover and the shroud, it may be difficult to guide the air from the bumper cover side to the shroud side. On the other hand, if the thickness of the plate body 12 is more than 2.5 mm, the weight of the plate body 12, eventually of the air guide plate 10, may be increased.

The thickness of each of the rear and front sealing members 26, 28 is preferably within a range of about 0.3 to 0.8 mm. Each of the rear and front sealing members 26, 28 having a thickness of less than 0.3 mm may have significantly low strength in some cases. On the other hand, each of the rear and front sealing members 26, 28 having a thickness of more than 0.8 mm may have insufficient deformability in some cases.

As apparent from Fig. 2, the rear sealing member 26 extends obliquely backward in the direction entering into the airflow introduced to the shroud side, i.e., extends obliquely backward in a downward direction in Fig. 2, from a rear edge surface 30 of the plate body 12 at the position nearer to the air guide surface 13 (lower side in Fig. 2) than the center in the width direction of the rear edge surface 30 (in the up and down direction in Fig. 2). In other words, the rear sealing member 26 extends backward from the rear end section 18 (the rear edge surface 30) such that a base end portion 32 (an end portion of the rear sealing member 26 positioned at the plate body 12 side) and the air guide surface 13 form an angle α₁ of more than 90 degrees to less than 180 degrees. The sealing member that forms an angle of more than 90 degrees to less than 180 degrees with the guide surface is referred to as a first sealing member.

The rear sealing member 26 has a rear guide surface 34 which is flat at one surface of the two surfaces in the thickness direction of the rear sealing member 26. The rear guide surface 34 is a continuous surface from the air guide surface 13 and forms an angle α₁ with the air guide surface 13. That is, the rear guide surface 34 extends obliquely backward in the downward direction in Fig. 2 from the rear end of the air guide surface 13.

The front sealing member 28 extends obliquely frontward in the downward direction in Fig. 2 from a front edge surface 36 at the position nearer to the air guide surface 13 (lower side in Fig. 2) than the center in the width direction of the front edge surface 36 (in the up and down direction in Fig. 2). In other words, the front sealing member 28 protrudes frontward from the front end section 36 such that the base end portion 38 of the front sealing member 28 (an end portion of the front sealing member 28 positioned at the plate body 12 side) and the air guide surface 13 form an angle β₁ of more than 90 degrees to less than 180 degrees.

The front sealing member 28 has a front guide surface 40 which is flat at one surface of the two surfaces in the thickness direction of the front sealing member 28. The front guide surface 40 is a continuous surface from the air guide surface 13 and forms the angle β₁ with the air guide surface 13. That is, the front guide surface 40 extends obliquely frontward in the downward direction in Fig. 2 from the front end of the air guide surface 13.

In the air guide plate 10 of the present embodiment, when a tip end portion of the rear sealing member 26 is pressed frontward (in the direction indicated by an arrow X in Fig. 2), rotation moment, which take a connection portion between the base end portion 32 and the rear edge surface 30 as a center of rotation, or bending moment, which take the base end portion 32 as a bending portion, is applied to the rear sealing member 26. By the application of the moment, as shown in Fig. 2 with the two-dotted chain line, the base end portion 32 of the rear sealing member 26 is subjected to flexural deformation which allow the entire rear sealing member 26 to be subjected to the bending deformation such that the angle α₁ between the base end portion 32 and the air guide surface 13 is made smaller.

Further, when a tip end portion of the front sealing member 28 is pressed backward (in the direction indicated with an arrow Y in Fig. 2), rotation moment, which take a connection portion between the base end portion 38 and the front edge surface 36 as a center of rotation, or bending moment, which take the base end portion 38 as a bending portion, is applied to the front sealing member 28. Thus, as shown in the two-dotted chain line in Fig. 2, the base end portion 38 of the front sealing member 28 is subjected to flexural deformation which allow the entire front sealing member 28 to be subjected to the bending deformation such that the angle α₁ between the base end portion 38 and the air guide surface 13 is made smaller.

In the conventional air guide plate including a rear sealing member (26) and a front sealing member (28), respectively, on a rear edge surface (30) and a front edge surface (36) so as to extend parallel with an air guide surface (13) from the rear edge surface (30) or the front edge surface (36), when a tip end portion of the rear sealing member (26) is pressed frontward or when a tip end portion of the front sealing member (28) is pressed backward, the entire rear sealing member (26) and the entire front sealing member (28) are subjected to flexural deformation, while a compression load is applied to a base end portion (32) of the rear sealing member (26) and a base end portion (38) of the front sealing member (28).

Compared with the conventional air guide plate, in the air guide plate 10 of the present embodiment, as described above, when the tip end portion of each of the rear sealing member 26 and the front sealing member 28 is pressed frontward or backward, rotation moment or bending moment is applied to each of the sealing members 26, 28. Thus, the entire rear sealing member 26 and the entire front sealing member 28 are subjected to further bending deformation in the direction of tilt. Therefore, it can be prevented to the maximum extent possible that the compression load is applied to the base end portions 32, 38 when the sealing members 26, 28 are pressed frontward or backward. Thus, when the tip end portions of the rear sealing member 26 and the front sealing member 28 are pressed to frontward or backward, the reaction force to be generated at the sealing members 26, 28 can be effectively reduced.

Although the angle α₁ between the base end portion 32 of the rear sealing member 26 and the air guide surface 13 and the angle β₁ between the base end portion 38 of the front sealing member 26 and the air guide surface 13 are not particularly limited as long as they are within a range of more than 90 degrees to less than 180 degrees, it is preferable that the angles α₁ and β₁ be within the range of about 115 degrees to 145 degrees.

Further, although the width of each of the rear and front sealing members 26, 28 (dimension indicated by W₁ and W₂ in Fig. 2) is not particularly limited, it is preferable that the width be in a range of 5 to 50 mm. Since the width of 5 mm or more is larger than the width of the average gap between the plate body 10 and a shroud (a back side gap 56, which will be described later) and is larger than the width of the average gap between the plate body 10 and a bumper cover (a front side gap 58, which will be described later), tip end portions of the rear and front sealing members 26, 28 surely contact with the shroud and the bumper cover under bending deformation. Further, since each of the rear and front sealing members 26, 28 has the width of not more than 50 mm, the width of the rear and front sealing members 26, 28 will not be larger than necessary. Consequently, it can be prevented to the maximum extent possible that the weight of the air guide plate 10 is increased by the formation of the rear and front sealing members 26, 28.

As shown in Fig. 3 and Fig. 4, two air guide plates 10 of the present embodiment having the above structure are disposed between a bumper cover 42, which is an automobile part, and a shroud 46, which is another automobile part surrounding a radiator 44 positioned in back of the bumper cover 28, such that the air guide plates 10 extend in the front and back direction of the automobile so as to be adjacent to each other with a predetermined distance therebetween in the vehicle width direction while the air guide surfaces 13, 13 of the air guide plates 10, 10 are opposed to each other. Accordingly, the airflow produced during driving of the automobile is guided to the radiator 44 by the air guide surface 13 of each of the two air guide plates 10, 10.

The bumper cover 42 has a longitudinal cross sectional shape that protrudes curvedly frontward. The bumper cover 42 is fixed to a bumper reinforcement 48 which is disposed at the front of the automobile and extends in the vehicle width direction. Further, the bumper cover 42 has an air inlet 50 at a middle section thereof in the vehicle width direction.

The shroud 46 has a rectangular tubular shape, as a whole, that is slightly larger than the radiator 44. The shroud 46 is disposed so as to extend in the front and back direction of the automobile and fixed while being externally disposed on the radiator 44. Specifically, the shroud 46 integrally includes two vertical walls 52a, 52b that extend straight in the vertical direction and two horizontal walls 54a, 54b that extend straight in the vehicle width direction. The two vertical walls 52a, 52b and two horizontal walls 54a, 54b are arranged so as to cover four sides of the radiator 44, i.e., upper, lower, left and right surfaces of the radiator, such that they space apart from the four sides of the radiator 44 with a predetermined distance therebetween.

The two air guide plates 10, 10 are disposed between the bumper cover 42 and the shroud 46 so as to be positioned outside of the vertical walls 52a, 52b of the shroud 46 in the vehicle width direction with the rear sealing member 26 being extended inwardly in the vehicle width direction. The plate body 12 of each of the two air guide plates 10, 10 is positioned such that the rear edge surface 30 of the plate body 12 extends in the vertical direction along each of the vertical walls 52a, 52b with a predetermined distance between the rear edge surface 30 and the front face of the vertical walls 52a, 52b in the front and back direction. As a result, back side gaps 56, 56 as the designed gap are provided so as to extend in the vertical direction between the rear edge surfaces 30, 30 and the front face of each of the vertical walls 52a, 52b. In other words, the plate bodies 12, 12 are not connected or fixed to the shroud 46.

The two air guide plates 10, 10 are positioned in back of the bumper cover 42 such that the front end section 20 of each of the plate bodies 12, 12 extends in the vertical direction along the inner surface of the bumper cover 42. Further, under installation of the air guide plates 10, 10, the front edge surface 36 of each of the plate bodies 12, 12 and the inner surface of the bumper cover 42 are opposed to each other in the front and back direction with a predetermined distance therebetween. As a result, a front side gap 58 as the designed gap is provided so as to extend in the vertical direction between the front edge surface 36 and the inner surface of the bumper cover 42. In other words, the plate bodies 12, 12 are also not connected or fixed to the bumper cover 42.

Further, the two air guide plates 10, 10 are fixed to the bumper reinforcement 48, which is inserted into the notch 22 formed at the front end section 20, by bolting at the mounting projections 24, whereby the two air guide plates 10, 10 are mounted at the front of the vehicle. It is to be understood that each of the air guide plates 10 may be mounted to a member other than the bumper reinforcement 48, for example, a radiator support.

The rear sealing member 26 of each of the two air guide plates 10, 10, which are mounted at the front of the automobile as described above, is in contact with the front face of each of the vertical walls 52a, 52b of the shroud 46 at the tip end portion thereof in a state where the rear sealing member 26 is deformed so as to be bent in such a way that the angle α₁ between the base end portion 32 and the air guide surface 13 is made smaller. In a state where the base end portion 32 of each of the rear sealing members 26 is subjected to flexural deformation and the tip end portion of each of the rear sealing members 26 is contacted with the front face of each of the vertical walls 52a, 52b, the angle α₁ between the base end portion 32 of the rear sealing member 26 and the air guide surface 13 is maintained to be more than 90 degrees.

The front sealing member 28 is also in contact with the inner surface of the bumper cover 42 at the tip end portion thereof in a state where the front sealing member 28 is deformed so as to be bent in such a way that the angle β₁ between the base end portion 38 and the air guide surface 13 is made smaller. In a state where the base end portion 38 of each of the front sealing members 28 is subjected to flexural deformation and the tip end portion of each of the front sealing member 28 is contacted with the inner surface of the bumper cover 42, the angle β₁ between the base end portion 38 of the front sealing member 28 and the air guide surface 13 is maintained to be more than 90 degrees.

In other words, in a state where the tip end portion of the rear sealing member 26 of each of the two air guide plates 10, 10 is in contact with the respective vertical walls 52a, 52b of the shroud 46, rotation moment, which take the base end portion 32 as a center of rotation, or bending moment, which take the base end portion 32 as a bending portion, is applied to the rear sealing member 26. Further, in a state where the tip end portion of each of the front sealing members 28 is in contact with the inner surface of the bumper cover 42, rotation moment, which take the base end portion 38 as a center of rotation, or bending moment, which take the base end portion 38 as a bending portion, is applied to the rear sealing member 28.

Consequently, the back side gaps 56, 56 which are provided between the rear end sections 18, 18 of the plate bodies 12, 12 of the two air guide plates 10, 10 and the vertical walls 52a, 52b of the shroud 46 are surely sealed by the rear sealing members 26, 26. Further, the front side gaps 58, 58 which are provided between the front end sections 20, 20 of the plate bodies 12, 12 and the bumper cover 42 are surely sealed by the front sealing members 28, 28. In a state where the back and front side gaps 56, 58 are sealed by the rear and front sealing members 26, 28, the reaction force of each of the sealing members 26, 28 against the bending deformation, which is applied to the vertical walls 52a, 52b of the shroud 46 or the bumper cover 42 from the rear sealing member 26 or the front sealing member 28, can be minimized to the maximum extent possible.

Each of the base end portions 32, 38 can be subjected to further flexural deformation with the rear sealing member 26 and the front sealing member 28 of the air guide plate 10 being in contact with the shroud 46 and the bumper cover 42 under flexural deformation of the base end portions 32, 38.

Therefore, under installation of the air guide plate 10 between the bumper cover 42 and the shroud 46, when the plate body 12 and the shroud 46, or the plate body 12 and the bumper cover 42, are relatively displaced in the front and back direction of the vehicle due to the vibration input during driving of the automobile, for example, the amount of flexural deformation of the base end portions 32, 38 of the rear and front sealing members 26, 28 is increased or decreased depending on the relative displacement. Thus, the amount of bending deformation of each of the sealing members 26, 28 is changed. As a result, the contact between the sealing members 26, 28 and the shroud 46 or the bumper cover 42 can be maintained to the maximum extent possible, and thus the back and front side gaps 56, 58 can be advantageously kept sealed by the rear and front sealing members 26, 28.

Consequently, since the air guide plate 10 of the present embodiment is disposed between the bumper cover 42 and shroud 46, the air guide plate 10 guides the airflow produced during driving of the automobile well to the radiator 44 and prevents the air surely and stably from leaking through the front side gap 58 or the back side gap 56. Thus, stable sealing properties between the shroud 46 and the bumper cover 42 can be sufficiently exhibited.

Further, in the air guide plate 10, especially, the angle α₁ between the base end portion 32 of the rear sealing member 26 and the air guide surface 13 is determined so as to be more than 90 degrees in a state where the tip end portion of each of the rear and front sealing members 26, 28 is contacted with the shroud 46 or the bumper cover 42. By this arrangement, the airflow guided along the air guide surface 13 of the plate body 12 can flow smoothly and sufficiently to the radiator 44 by the rear guide surface 34 of the rear sealing member 26.

In the air guide plate 10, reaction force against the bending deformation of the sealing members 26, 28, which is applied to the vertical walls 52a, 52b of the shroud 46 or bumper cover 42 from the rear sealing member 26 and the front sealing member 28, in a state where the tip end portion of each of the rear and front sealing members 26, 28 subjected to bending deformation is contacted with the shroud 46 or the bumper cover 42, is made small to the maximum extent possible. Thus, even when relative displacement between the shroud 46 or the bumper cover 42 and the plate body 12 is repeatedly caused by vibration input to the automobile, it can be effectively prevented that an area of the shroud 46 that is contacted by the rear sealing member 26, an area of the bumper cover 42 that is contacted by the front sealing member 28, an area of the rear sealing member 26 that is contacted by the shroud 46, or an area of the front sealing member 28 that is contacted by the bumper cover 42, is worn or cut. As a result, the sealing properties between the rear sealing member 26 and the shroud 46 and the sealing properties between the front sealing member 28 and the bumper cover 42 can be further stably secured.

Further, in the air guide plate 10 of the present embodiment, the cooling efficiency and the aerodynamic performance of the radiator 44 can be advantageously improved.

In the air guide plate 10 of the present embodiment, the rear and front sealing members 26, 28 extend obliquely at an angle of more than 90 degrees to less than 180 degrees with respect to the air guide surface 13 of the plate body 12, respectively, from the rear and front end sections 18, 20. Thus, the plate body 12 can be positioned outside of the vertical walls 52a, 52b of the shroud 46 in the vehicle width direction. This positional relationship prevent the plate body 12 from contacting with the shroud 46 or the radiator 44 even when the plate body 12 is largely displaced to the back side of the vehicle, for example, thereby effectively preventing the damage of the shroud 46 or the radiator 44.

Further, in the air guide plate 10, the plate body 12 and the rear and front sealing member 26, 28 are formed of the same resin material. Thus, unlike the conventional product including the sealing members (26, 28) and the plate body (12) that are formed of different materials, only one kind of material is required to form the air guide plate 10. As a result, the material cost of the air guide plate 10 is advantageously reduced. Further, the used air guide plate 10 can be recycled without a step of separating the plate body 12 and the sealing members 26, 28.

Furthermore, the air guide plate 10 of the present embodiment is an integrally molded product including the plate body 12 and the rear and front sealing members 26, 28. Thus, unlike the conventional product that does not include the sealing members (26, 28) but includes the cushioning material which is bonded to the outer periphery of the plate body (12), the air guide plate 10 of the present embodiment does not require a bonding process in addition to the molding process of the plate body 12. As a result, productivity of the air guide plate can be advantageously improved.

In the air guide plate 10 of the present embodiment, each of the rear and front sealing members 26, 28 has a flat plate shape. Thus, the width of the rear and front sealing members 26, 28 necessary for allowing the tip end portions thereof to be contacted with the shroud 46 and the bumper cover 42 in the present embodiment can be smaller than the width of the rear and front sealing members 26, 28 having a curved shape. As a result, in the formation of the rear and front sealing members 26, 28, which are thin, by injection molding, flowability of the molten resin in cavities for forming the sealing members 26, 28 can be improved.

Accordingly, the air guide plate 10 of the present embodiment can easily realize a structure that exhibits stable sealing properties by rear and front sealing members 26, 28, at a low cost with the excellent recycling properties.

The air guide plate 10 of the present embodiment is not connected or fixed to the shroud 46 and the bumper cover 42. Therefore, when the shroud 46 or bumper cover 42 and the air guide plate 10 are relatively displaced so as to be close to each other due to the impact load inputted in a light collision, the impact load can be advantageously reduced or absorbed, because the rear and front sealing members 26, 28, which are in contact with the shroud 46 and the bumper cover 42 under flexural deformation, are subjected to further flexural deformation.

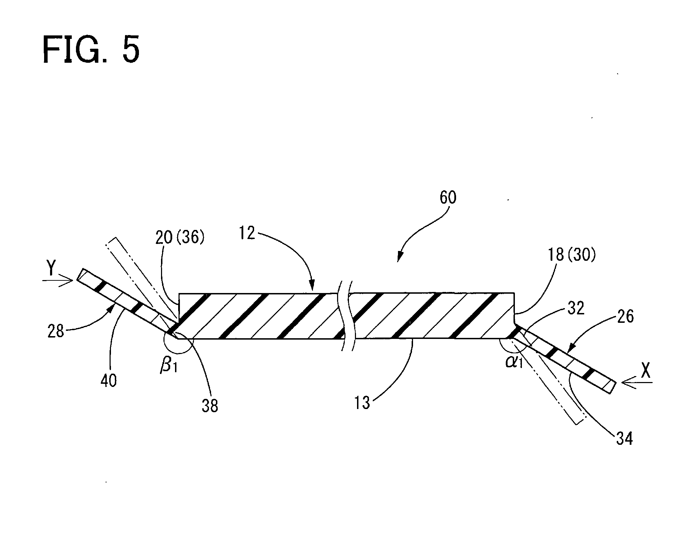

Fig. 5 shows a second embodiment of the air guide plate for an automobile having a structure of the present invention. An air guide plate 60 of this embodiment shown in Fig. 5 has the same structure as the air guide plate 10 of the first embodiment except that the front sealing member 28 is formed on the plate body 12 in a different way. With respect to the air guide plate 60 of this embodiment, the same reference numerals as used in Fig. 1 and Fig. 2 are used for members and portions having the same structures as those of the first embodiment shown in Fig. 1 and Fig. 2, and a detailed explanation of which is dispensed with.

As apparent from Fig. 5, in the air guide plate 60 of the present embodiment, the front sealing member 28 extends obliquely frontward in the direction of the side opposite to the air guide surface 13 side, i.e., in an upward direction in Fig. 5, from the front edge surface 36 at the position nearer to the air guide surface 13 (lower side in Fig. 5) than the center in the width direction of the front edge surface 36 (in the up and down direction in Fig. 5). The front guide surface 40 protrudes obliquely frontward in the upward direction in Fig. 5 from the front end section of the air guide surface 13. In other words, the front sealing member 28 extends frontward from the front edge surface 36 such that the angle β₁ between the base end portion 38 of the front sealing member 28 (an end portion of the front sealing member 28 positioned at the plate body 12 side) and the air guide surface 13 is within the range of more than 180 degrees to less than 270 degrees. The sealing member that forms an angle of more than 180 degrees to less than 270 degrees with the guide surface is referred to as a second sealing member.

Thus, in the air guide plate 60 of the present embodiment, when the tip end portion of the front sealing member 28 is pressed backward (in the direction indicated in the arrow Y in Fig. 5), the rotation moment, which take the connecting portion between the base end portion 38 and the front edge surface 36 as a center of rotation, or bending moment, which take the base end portion 38 as a bending portion, is applied to the front sealing member 28. Thus, as shown in the two-dotted chain line in Fig. 5, the base end portion 38 of the front sealing member 28 is subjected to flexural deformation which allows the entire front sealing member 28 to be subjected to the bending deformation such that the angle β₁ between the base end portion 38 and the air guide surface 13 is made larger.

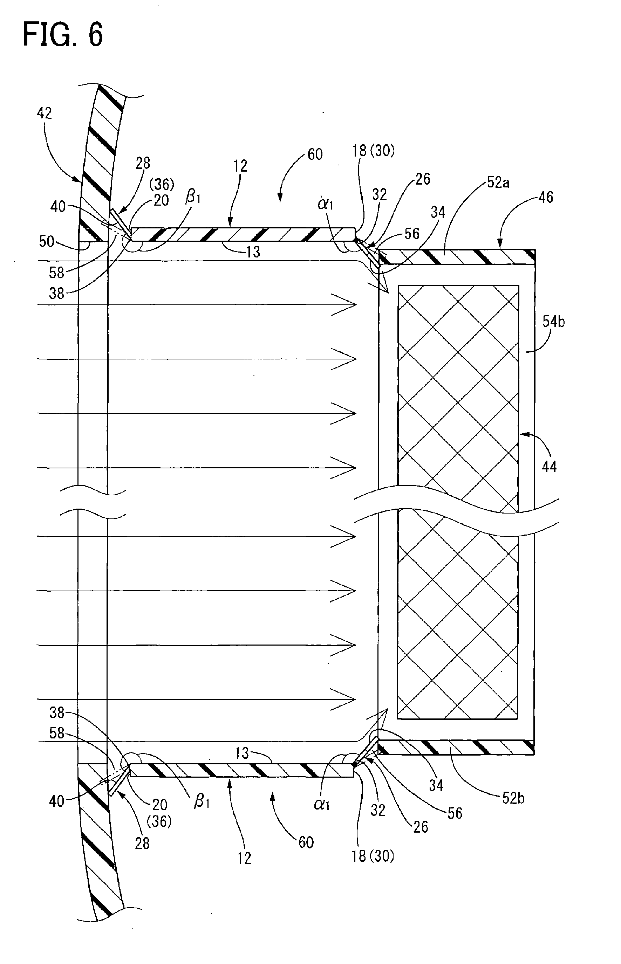

As shown in Fig. 6, the two air guide plates 60 each including the front sealing member 28 having the above structure are mounted in the front of the vehicle by bolting to the mounting projections 24 while they are opposed to each other.

In a state where the two air guide plates 60, 60 are disposed in the front of the automobile, the rear sealing member 26 of the respective air guide plates 60 is contacted with the front face of the respective vertical walls 52a, 52b of the shroud 46 at the tip end portion thereof while the base end portion 32 of the rear sealing member 26 is subjected to the flexural deformation like the rear sealing member 26 of the air guide plate 10 of the first embodiment.

On the other hand, the front sealing member 28 of the respective air guide plates 60 is contacted with the inner surface of the bumper cover 42 at the tip end portion thereof while the base end portion 38 is subjected to flexural deformation which allows the front sealing member 28 to be subjected to the bending deformation such that the angle β₁ between the base end portion 38 and the air guide surface 13 is made larger. Even in a state where the base end portion 38 of the front sealing member 28 is subjected to flexural deformation and thus the tip end portion of the front sealing member 28 is in contact with the inner surface of the bumper cover 42, the angle β₁ between the base end portion 38 of the front sealing member 28 and the air guide surface 13 is maintained to be less than 270 degrees.

Accordingly, while the tip end portion of each of the rear sealing member 26 and the front sealing member 28 of each of the two air guide plates 60, 60 is contacted with the respective two vertical walls 52a, 52b of the shroud 46 or with the inner surface of the bumper cover 42, rotation moment, which take the respective base end portions 32, 38 as a center of rotation, or bending moment, which take the respective base end portions 32, 38 as a bending portion, is applied to the rear sealing member 26 and the front sealing member 28.

As a result, the back and front side gaps 56, 58 formed between the plate body 12 of each of the two air guide plates 60, 60 and one of the shroud 46 and the bumper cover 42 can be surely sealed by the rear sealing member 26 and the front sealing member 28, respectively. Further, the reaction force against the bending deformation of the respective sealing members 26, 28 that is applied to the shroud 46 or the bumper cover 42 from the rear sealing member 26 or the front sealing member 28 is minimized, in a state where the back and front side gaps 56, 58 are sealed by the rear and front sealing members 26, 28.

The rear sealing member 26 and the front sealing member 28 of the air guide plate 60 are configured such that each of the base end portions 32, 38 can be subjected to further flexural deformation, in a state where the sealing members 26, 28 are contacted with the shroud 46 or the bumper cover 42 under the bending deformation caused by the flexural deformation of each of the base end portions 32, 38.

The air guide plate 60 in accordance with the second embodiment can advantageously obtain substantially the same advantages as the air guide plate 10 of the first embodiment.

In the air guide plate 60 of the second embodiment, the front sealing member 28 extends frontward from the front edge surface 36 such that the angle β₁ between the base end portion 38 of the front sealing member 28 and the air guide surface 13 is within a range of more than 180 degrees to less than 270 degrees. Thus, as shown in Fig. 6, when the base end portion 38 of the front sealing member 28 is subjected to flexural deformation such that the tip end portion of the front sealing member 28 is in contact with the inner surface of the bumper cover 42, the air guide surface 13 and a periphery of the opening of the air inlet 50 can be positioned in a straight line in the front and back direction of the vehicle. Thus, the air passed through the air inlet 50 can be guided to the radiator 44 side more efficiently.

To confirm that the air guide plate having the structure of the present invention has the above-described excellent characteristic, the inventors of the present invention conducted following tests. The details of the tests will be described below.

Initially, six kinds of air guide plates are prepared. Each of the air guide plates has the structure shown in Fig. 1 and Fig. 2, i.e., the air guide plate includes the rear sealing member and the front sealing member, which have a thin flat plate shape and which are integrally formed on the rear end section and the front end section of the air guide plate, respectively. Each of the six air guide plates has the angle α₁, which is formed between the base end portion of the rear sealing member and the air guide surface, and the angle β₁, which is formed between the base end portion of the front sealing member and the air guide surface, that are each within a range of more than 90 degrees to less than 180 degrees. The six air guide plates are referred to as Examples 1 to 6. Specifically, Example 1 has the respective angles α₁ and β₁ of 120 degrees; Example 2 has the respective angles of 135 degrees; Example 3 has the respective angles of 150 degrees; Example 4 has the respective angles of 165 degrees; Example 5 has the respective angles of 170 degrees; and Example 6 has the respective angles of 175 degrees.

The six air guide plates in Examples 1 to 6 were formed by injection molding using the blend of polypropylene and rubber having a flexural modulus of 1000 MPa. The plate body of the respective air guide plates has a thickness of 1.5 mm, each of the rear and front sealing members has a thickness of 0.5 mm, and each of the rear and front sealing members has a width of 25 mm.

For comparison, another air guide plate was prepared as Comparative Example 1 that includes the rear sealing member and the front sealing member integrally formed on the rear end section and the front end section of the plate body having a flat plate shape, in which the respective angles α₁ and β₁ between each of the base end portions of the rear and front sealing members and the air guide surface are 180 degrees. The air guide plate of Comparative Example 1 was formed by injection molding using the same material as the air guide plates in Examples 1 to 6. The thickness of the plate body of the air guide plate and the thickness and the width of the rear and front sealing members in Comparative Example 1 are the same as those in the air guide plates in Examples 1 to 6.

By using the seven kinds of air guide plates of Examples 1 to 6 and Comparative Example 1, the amount of reaction force generated at the rear sealing member when the tip end portion of the rear sealing member provided on the respective air guide plates is pressed to allow the base end portion of the rear sealing member to be subjected to flexural deformation was examined as follows.

Specifically, the plate body of the air guide plate in Example 1 was fixed on a commercially available autograph (type: AG-50kNG, manufactured by SHIMADZU CORPORATION) and a compression jig of the autograph was contacted with the tip end portion of the rear sealing member with no load applied. Then, the compression jig was moved toward the plate body at a speed of 1 mm/second to apply load to the rear sealing member. Thus, the base end portion of the rear sealing member was subjected to flexural deformation and the amount of bending deformation of the rear sealing member was gradually increased. The amount of load applied to the compression jig from the rear sealing member was measured consecutively. The relation between an amount of the displacement of the compression jig toward the plate body (corresponding to the amount of flexural deformation of the rear sealing member) and an amount of reaction force generated at the rear sealing member was examined using the measurement data.

Subsequently, the same test as above was conducted using each of the air guide plates in Examples 2 to 6 and Comparative Example 1. Then, the relation between an amount of the displacement of the compression jig toward the plate body and an amount of reaction force generated at the rear sealing member was examined using the measurement data of each of Examples 2 to 6 and Comparative Example 1. The results of the tests using the air guide plates in Examples 1 to 6 and Comparative Example 1 are shown in Fig. 7.

As apparent from Fig. 7, when the air guide plates of Examples 1 to 6 are compared with the air guide plate of Comparative Example 1, it can be confirmed that the amount of reaction force generated at the rear sealing member of the air guide plate of Examples 1 to 6 is smaller than that of Comparative Example 1 at the same value of displacement of compression jig toward the plate body no matter what the value is. In addition, in the air guide plate of Comparative Example 1, at the initial stage of the displacement of the compression jig toward the plate body from the position where the compression jig is in contact with the rear sealing member without load, the reaction force generated at the rear sealing member is rapidly increased. Comparing to this, in the air guide plates of Examples 1 to 6, no rapid increase in the reaction force generated at the rear sealing member is confirmed.

This result clearly shows that, the air guide plate having the structure of the present invention can make the reaction force against the bending deformation of the sealing member, which is applied to the automobile part from the sealing member, effectively smaller than that of the air guide plate having the conventional structure, under installation of the air guide plate having the structure of the present invention in the automobile with the tip end portion of the sealing member being contacted with the automobile part under flexural deformation of the base end portion of the sealing member to seal the gap between the sealing member and the automobile part.

While the specific embodiment of the present invention has been described in detail, for illustrative purpose only, it is to be understood that the present invention is not limited to the details of the illustrated embodiments.

For example, the position of the sealing members 26, 28 with respect to the plate guide 12 is not limited to the exemplified position. The sealing members 26, 28 may be formed on any position of the plate body 12 as long as it is integrally formed on the end section of the plate body 12. For example, in addition to, or instead of the rear and front end sections 18, 20 of the plate body 12, the sealing member may be integrally formed on an upper end section or lower end section of the plated body 12, or the sealing member may be integrally formed on a periphery of the notch 22. When the sealing member is provided around the periphery of the notch 22, the gap between the bumper reinforcement 48, which is inserted into the notch 22, and the plate body 12 can be sealed. If there is no sealing member between the plate body 12 and the bumper reinforcement 48, a coating film (for anti-corrosion, for example) formed on the surface of the bumper reinforcement 48 is damaged by the plate body 12 at the time of relative displacement of the plate body 12 and the bumper reinforcement 48. However, the sealing member that gently contacts with the surface of the bumper reinforcement 48 can advantageously prevent this damage, and thus the effect of the coating film cannot be degraded.

The sealing structure of the front and back side gaps 58, 56 are not necessarily provided by only the rear and front sealing members 26, 28, which are integrally formed on the end section of the plate body 12. The front and back side gaps 58, 56 may be partly sealed by the sealing member made of a cushioning material, for example, that is bonded to a part of the end section of the plate body 12.

For example, when an air conditioning hose whose temperature becomes high is provided between the horizontal wall 54b of the shroud 46, which is positioned below the radiator 44, and the rear end section 18 of the plate body 12, a sealing member formed of a cushioning material having a heat resistance properties may be attached to the lower end portion of the rear end section 18 so as to contact with the air conditioning hose. Thus, the gap formed between the rear end section 18 of the plate body 12 and the automobile part such as an air conditioning hose is sealed. Further, when an outer surface of the automobile part that is positioned around the outer periphery of the plate body 12 with a predetermined distance therebetween has a complex shape, the gap between the automobile part and the plate body 12 may be sealed by a sealing member formed of a cushioning material, which can be easily deformed. In such a case, the sealing member is provided at a portion of the plate body 12 facing to the automobile part such that it is in contact with an outer surface of the automobile part.

The automobile part which forms a gap together with the plate body 12 is not limited to the above described shroud, bumper cover, air conditioning hose, or the like. Any automobile part can form a gap together with the plate body 12 under installation of the air guide plate 10 in the automobile as long as it is disposed near the plate body 12. Examples of the automobile part include a radiator, radiator support, bumper reinforcement, lower absorber, upper absorber, harness, various hoses, and another air guide plate that is adjacent to one air guide plate.

In the present embodiment, both of the back side gap 56, which is provided between the shroud 46 and the plate body 12, and the front side gap 58, which is provided between the bumper cover 42 and the plate body 12, are sealed by the rear and front sealing members 26 and 28. However, one of the rear and front sealing members 26, 28 may be omitted to seal only one of the back side gap 56 and the front side gap 58.

It is to be understood that the entire shape of the plate body 12 may be suitably changed depending on shape of space of the front of the automobile in which the plate body 12 is disposed, for example.

The number, shape and the like of the sealing member are not particularly limited.

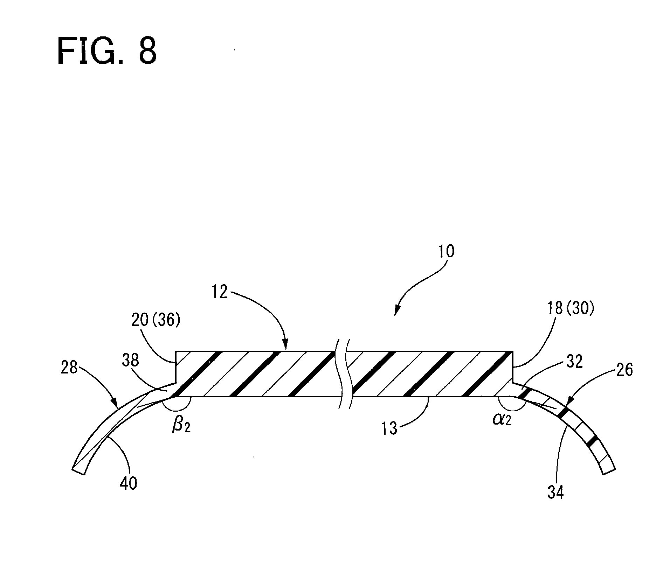

For example, as shown in Fig. 8, the rear sealing member 26 and the front sealing member 28 may have a curved plate shape. In this case, one of the angle α₂ between the base end portion 32 of the rear sealing member 26 and the air guide surface 13 and the angle β₂ between the base end portion 38 of the front sealing member 28 and the air guide surface 13, more specifically, one of the angles α₂ and β₂ between a tangential line of the respective base end portions 32, 38 and the air guide surface 13, should be within a range of more than 90 degrees to less than 180 degrees. With respect to the embodiment shown in Fig. 8, the same reference numerals as used in Fig. 1 and Fig. 2 are used for members and portions having the same structures as those of the first embodiment shown in Fig. 1 and Fig. 2, and a detailed explanation of which is dispensed with.

Further, the formation position of the rear sealing member 26 and the front sealing member 28 is not particularly limited as long as they are integrally formed on the rear end section 18 and the front end section 20 of the plate body 12. The rear and front sealing members 26, 28 may extend from any positions in the width direction (up and down direction in Fig. 2) of the rear edge surface 30 and the front edge surface 36.

In the first embodiment, the rear sealing member 26 and the front sealing member 28 that form the angles α₁ and β₁ of within a range of more than 90 degrees to less than 180 degrees between the base end portions 32, 38 thereof and the air guide surface 13 are disposed so as to be in contact with the automobile parts such as a shroud 46 and the bumper cover 42, in such a way that the angles α₁ and β₁ are made smaller by flexural deformation. In the second embodiment, the front sealing member 28 that form the angle β₁ of within a range of more than 180 degrees to less than 270 degrees between the base end portion 38 thereof and the air guide surface 13 is disposed so as to be in contact with the automobile part such as a bumper cover 42, in such a way that the angle β₁ is made larger by flexural deformation. However, the rear sealing member 26 and the front sealing member 28 that form the angles α₁ and β₁ of within a range of more than 90 degrees to less than 180 degrees between the base end portions 32, 38 thereof and the air guide surface 13 may be disposed so as to be in contact with the automobile part in such a way that the angles α₁ and β₁ are made larger by flexural deformation. Further, one of the rear sealing member 26 and the front sealing member 28 that forms angles α₁ and β₁ of within a range of more than 180 degrees to less than 270 degrees between the base end portions 32, 38 thereof and the air guide surface 13 may be disposed so as to be in contact with the automobile part in such a way that the angles α₁ and β₁ are made larger by flexural deformation.

Although further details will not be described herein, it is to be understood that the present invention may be embodied with various other changes and modifications which may occur to those skilled in the art, without departing from the spirit and scope of the invention.

## Claims

1. An air guide plate for guiding an airflow produced during driving of an automobile to a radiator, the air guide plate being disposed at a front of the automobile so as to extend in a front and back direction of the automobile, comprising:
a plate body (12) formed of resin material and including an air guide surface (13), the plate body being arranged at a front of an automobile without being connected to at least one automobile part disposed in the front of the automobile such that the air guide surface extends in the front and back direction of the automobile; and
at least one first sealing member (26, 28) composed of a projecting strip formed of resin material that has a thickness smaller than the plate body and that is provided on at least one end section (18, 20) of the plate body by an integral molding, the at least one first sealing member including a base end portion (32, 38) that is deformable and extends from the end section of the plate body at an angle of more than 90 degrees to less than 180 degrees with respect to the air guide surface of the plate body.

2. The air guide plate according to claim 1, further comprising at least one second sealing member (28) composed of a projecting strip formed of resin material that has a thickness smaller than the plate body and that is provided on an end section (20) of the plate body by the integral molding, the at least one second sealing member including a base end portion (38) that is deformable and extends from the end section of the plate body at an angle of more than 180 degrees to less than 270 degrees with respect to the air guide surface of the plate body.

3. The air guide plate according to claim 1, wherein the at least one first sealing member has a flat plate shape.

4. The air guide plate according to claim 2, wherein the at least one second sealing member has a flat plate shape.

5. The air guide plate according to claim 1 or 3, wherein the resin material for forming the plate body and the at least one first sealing member is a blend of polypropylene and rubber.

6. The air guide plate according to claim 2 or 4, wherein the resin material for forming the plate body and the at least one second sealing member is a blend of polypropylene and rubber.

7. The air guide plate according to any one of claims 1 to 6, wherein the front of the automobile is between a shroud (46), which is disposed so as to cover sides of the radiator (44) of the automobile, and a bumper (42), which is located in front of the shroud, and the at least one automobile part includes the shroud and the bumper.

8. A sealing structure for preventing air from leaking through at least one gap (56, 58) formed between an air guide plate, which guides an airflow produced during driving of an automobile to a radiator, and at least one automobile part, which is disposed near the air guide plate, the air guide plate being disposed at a front of the automobile so as to extend in a front and back direction of the automobile,
wherein the air guide plate according to any one of claims 1, 3, or 5 is arranged such that the plate body of the air guide plate is disposed at the front of the automobile without being connected to the at least one automobile part and the air guide surface of the plate body extends in the front and back direction of the automobile, and the at least one first sealing member is disposed so as to be in contact with the at least one automobile part under flexural deformation, thereby closing the at least one gap by the at least one first sealing member to prevent the air from leaking therethrough.

9. The sealing structure according to claim 8, wherein the at least one first sealing member is in contact with the at least one automobile part in a state where the at least one first sealing member is allowed to be subjected to further flexural deformation when the at least one automobile part and the plate body are relatively displaced so as to be close to each other.

10. The sealing structure according to claim 8 or 9, wherein the at least one first sealing member is disposed so as to be in contact with the at least one automobile part such that the angle between the base end portion thereof and the air guide surface becomes smaller when the base end portion thereof is subjected to flexural deformation.

11. The sealing structure according to any one of claims 8 to 10, wherein the air guide plate further comprise at least one second sealing member composed of a projecting strip formed of resin material that has a thickness smaller than the plate body and that is provided on an end section of the plate body by the integral molding, the at least one second sealing member including a base end portion that is deformable and extends from the end section of the plate body at an angle of more than 180 degrees to less than 270 degrees with respect to the air guide surface of the plate body, and
wherein the at least one second sealing member is disposed so as to be in contact with the at least one automobile part under flexural deformation, thereby closing the at least one gap by the at least one second sealing member to prevent the air from leaking therethrough.

12. The sealing structure according to claim 11, wherein the at least one second sealing member is in contact with the at least one automobile part in a state where the at least one first sealing member is allowed to be subjected to further flexural deformation when the at least one automobile part and the plate body are relatively displaced so as to be close to each other.

13. The sealing structure according to claim 11 or 12, wherein the at least one second sealing member is disposed so as to be in contact with the at least one automobile part such that the angle between the base end portion thereof and the air guide surface becomes larger when the base end portion thereof is subjected to flexural deformation.

14. The sealing structure according to any one of claims 8 to 13, wherein the front of the automobile is between a shroud, which is disposed so as to cover sides of the radiator of the automobile, and a bumper, which is located in front of the shroud, and the at least one automobile part includes the shroud and the bumper.
